# EUROPEAN PATENT SPECIFICATION

(11) **EP 4 001 889 B1**
(45) Date of publication and mention of the grant of the patent: **01.01.2025**
(21) Application number: 21209339.7
(22) Date of filing: 19.11.2021
(51) Int. Cl.: G01N 3/04, G01N 3/24

(54) **APPARATUS TO MEASURE SHEAR PROPERTIES OF COMPOSITE MATERIALS**
SCHUBSPANNUNGSMESSGERÄT FÜR VERBUNDWERKSTOFF
APPAREIL POUR MESURER LES PROPRIETES EN CISAILLEMENT DE MATERIAUX COMPOSITES

(30) Priority: 20.11.2020 IT 202000027891
(43) Date of publication of application: 25.05.2022
(73) Proprietor: Universita' Degli Studi Dell'Aquila, 67100 L'Aquila (AQ) (IT)
(72) Inventor: DI ILIO, Antoniomaria, 67100 L'Aquila (IT); STAMOPOULOS, Antonios, 67100 L'Aquila (IT); DI GENOVA, Luca Glauco, 67100 L'Aquila (IT)
(74) Representative: Studio Torta S.p.A.

(56) References cited:
- CN-A- 110 672 408
- GUDE M. ET AL: "Modified V-notched rail shear test fixture for shear characterisation of textile-reinforced composite materials", POLYMER TESTING, vol. 43, 1 May 2015 (2015-05-01), AMSTERDAM, NL, pages 147 - 153, XP093023625, ISSN: 0142-9418, DOI: 10.1016/j.polymertesting.2015.03.007

## Description

### CROSS-REFERENCE TO RELATED APPLICATIONS

This patent application claims priority from Italian patent application no. 102020000027891 filed on November 20, 2020.

### TECHNICAL FIELD

The present invention concerns an apparatus to measure shear properties of composite materials.

In particular, the present invention consists of an advantageous, but not exclusive, application for measuring the shear properties of fibre-reinforced composite materials, to which the following description will explicitly refer without loss of generality.

### STATE OF THE PRIOR ART

As is known to a person skilled in the current state-of-the-art, components made of fibre-reinforced composite materials can be subject to shear stresses while they are being in use, and any resulting deformations may compromise the effectiveness and, therefore, the life of the component.

For some time now, the need has therefore been felt to be able to measure the shear strength of composite materials in order to verify these mechanical properties and, consequently, choose those most suitable for manufacturing the various components. Although this need has been felt for several years, to date the tests useful for defining the shear properties of nonhomogeneous (orthotropic or anisotropic) materials still have many criticalities. This is demonstrated by the high number of standards (more than 8) that have been introduced, the majority of which are intended for specific and non-universal cases.

The reference standard for determining the shear properties of fibrous composite materials is the ASTM D7078 standard. This standard is the result of combining the advantages of two types of test, the Iosipescu (for the type of specimen) and the Rail Shear Test (for transfer of the stress to the specimen). The ASTM D7078 standard introduces into the central region of the specimen a practically pure and homogeneous state of shear stress. An advantage of the V-Notched Rail Shear method is the universality of the test; by changing the lamination of the specimens, different shear properties are measured (G₁₂, G₁₃, G₂₃). Although the standard represents an innovative method, the instrumentation associated with it has a structure that entails drawbacks in terms of significance of the result.

In particular, under the ASTM standard the specimen to be tested is a flat rectangular parallelepiped with two symmetrical V notches, positioned in the centre of the longest side. The V notches affect the distribution of the shear deformation in the central region of the specimen, producing a more homogeneous distribution than a specimen without notches. Furthermore, thanks to the presence of these V notches, there is a reduced section in the centre of the specimen itself and consequently the shear stress is confined to this area and is greater than all the rest of the test material. Consequently, the area between the pair of V notches is subject to a pure shear stress.

The specimen as described above is reversibly fixed to two fixing components so that the V notches are located along the load axis of the machine and this axis passes through the centre of the thickness of the specimen. Each of the two fixing components houses a pair of locking plates (tabs), useful for clamping the specimen by means of screws, allowing to transfer the load to the specimen by means of the friction between the surfaces of the specimen and the locking plates.

Once the specimen has been loaded, using a universal testing machine, the relative movement between the fixing components introduces shear forces in the specimen until causing it to break in the region comprised between the two notches.

In the equipment associated with the ASTM standard, the two fixing components, after a certain relative movement value, tend to no longer guarantee the correct initial alignment, becoming distorted and thus introducing inside the specimen a shear load affected by other components (flexion). In this way the application of a pure shear stress cannot be guaranteed, and the results obtained from the moment, when the distortion occurs, are considered not reliable and not representative of the shear response of the material. Among the phenomena which the above-mentioned distortions can introduce there is also the occurrence of out-of-plane shear components, the presence of which can significantly influence the result of the test due to the anisotropy of the material, which represents an intrinsic property of composite materials.

The need was therefore felt for a new instrument able to overcome the drawbacks of the known state-of-the-art and, therefore, allow the correct application of the ASTM standard, avoiding the occurrence, inside the specimen, of a shear load affected by other parameters.

CN110672408 and Gude M. ET AL: "Modified V-notched rail shear test fixture for shear characterisation of textile-reinforced composite materials", Polymer Testing, vol. 43, 1 May 2015, pages 147-153 disclose assemblies to measure shear properties of composite materials according to the state of the art.

The inventors of the present invention have produced an instrument with technical characteristics in a way to meet the above need.

### SUBJECT OF THE INVENTION

The subject of the present invention is an apparatus to measure the shear properties of composite materials; the apparatus comprising a pair of fixing components on which a specimen of composite material is reversibly fixed and two pairs of locking plates, each of which is housed in a seat obtained in a relative fixing component and is designed to lock a lateral end of said specimen, clamping it on two opposite lateral surfaces thereof; said specimen being in contact exclusively with said two pairs of locking plates; each one of said fixing components comprising connection means for the connection to a material mechanical test machine defining a load axis, and being made in a single block with a material having a stiffness greater than or equal to 150 GPa;
said apparatus being characterized in that, comprises exclusively a pair of cylindrical guide bars arranged along respective axes parallel to the load axis, each of which has a first end fixed to one of the two fixing components and is slidingly housed in a through cavity obtained in the other of the two fixing components; each of said through cavities housing a recirculating ball sleeve (bearing rings) in which said guide bar runs.

For the effectiveness of the apparatus subject of the present invention, the inventors have deemed it extremely important for the specimen to be locked exclusively on the two opposite lateral surfaces and with locking elements that can exert a symmetrical action on the specimen. If, on the other hand, the specimen is locked by also engaging the surface of the upper and/or lower horizontal edges of the specimen, inevitably during performance of the test part of the load will be introduced into the specimen through said surfaces, thus causing an imbalance due to a partial contact surface and, consequently, the introduction of non-pure shear loads into the specimen.

Furthermore, the presence of only two guide bars allows the minimization of the contact surfaces and, therefore, the relative possible friction that can compromise the correct and representative measurement.

Preferably, the axes along which the guide bars are arranged, and the load axis lie on the same plane.

The presence of only two guide bars guarantees simpler alignment of the guide bar axes with the load axis.

Preferably, the first end of a guide bar is hot-fitted in a seat obtained in said fixing component.

Of all the possible coupling solutions between the guide bar and the fixing component, the inventors have chosen the hot-fitting solution as it provides the best guarantee of a stable coupling over time and is simple to implement. The hot press-fitting solution entails a direct connection between the pieces, namely, without the need to insert intermediate elements/materials such as, for example, bushes, clamping elements or keys.

In short, the hot-fitting solution for coupling the guide bar and the fixing component guarantees:
- the integrity of the single pieces, thus avoiding local plastic deformations and the need to provide notches, holes or threads;
- the absence of clearance and maintenance of the relative position between the pieces over time (for example, unlike a threaded coupling, hot-fitting of the pieces ensures that they do not come loose over time);
- absence of local plastic deformations (hard/soft material coupling) and/or of a thermally altered area of the welding, which in the case of load cycles compromises the life of the component;
- the possibility of transmitting high forces to the interface;
- simple and inexpensive to manufacture.

Lastly, the solution adopted is much less affected by fatigue phenomena (load cycles over time) than other types of coupling.

Preferably, said fixing components are made of steel.

Preferably, said apparatus comprises a Digital Image Correlation (DIC) system designed to record the deformations of the specimen.

Preferably, said locking plates have a surface roughness such as to increase the friction between the locking plates and the specimen.

### BRIEF DESCRIPTION OF THE DRAWINGS

An embodiment example of the present invention is described below for non-limiting and illustrative purposes with the aid of the attached figures, in which:
- figure 1 is an exploded perspective view of an embodiment of the apparatus according to the present invention; and
- figure 2 is a front view, with parts transparent for clarity, of the embodiment of figure 1.

### PREFERRED EMBODIMENT OF THE INVENTION

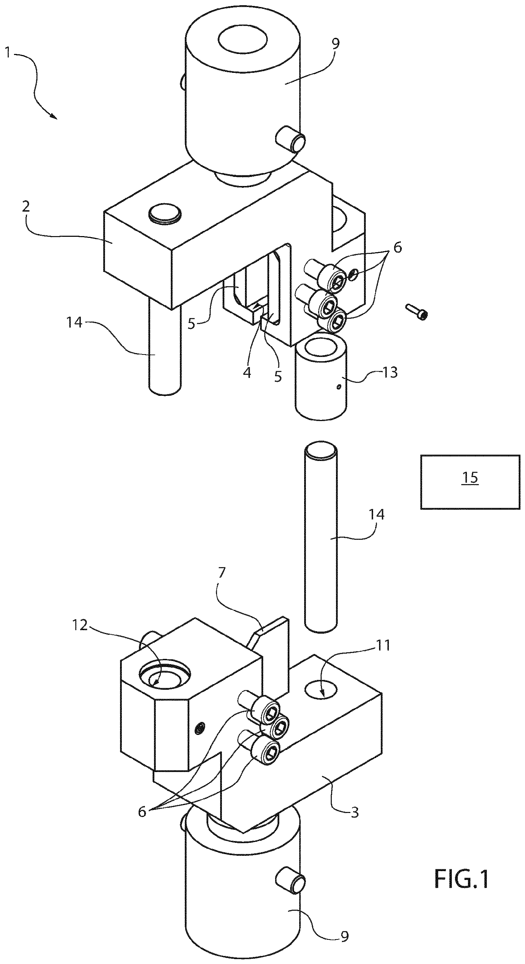

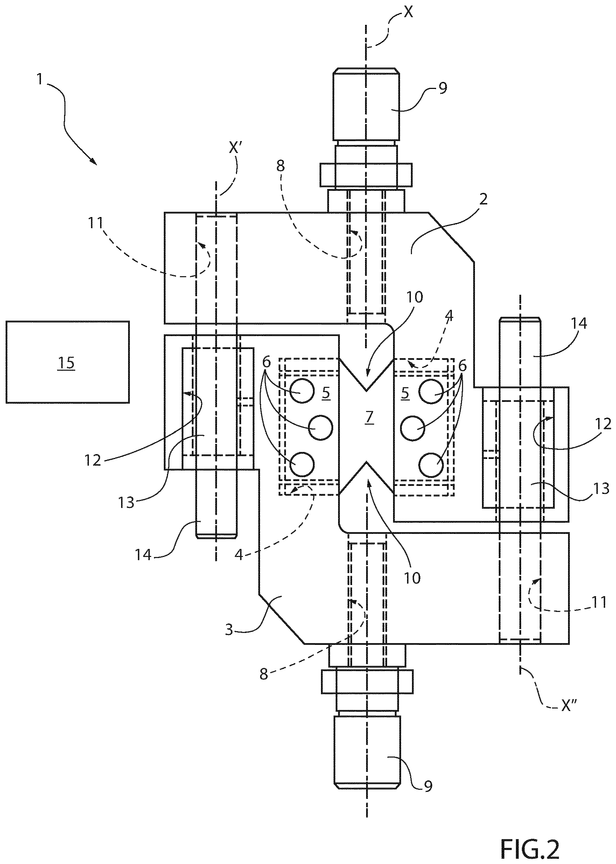

In figures 1 and 2 the number 1 indicates overall a measurement apparatus according to the present invention. The apparatus 1 comprises a first and a second fixing component 2 and 3, identical to each other and in each of which a groove 4 is obtained housing a pair of locking plates 5, which by means of the action of three screws 6 laterally lock a lateral end of a specimen 7 on opposite sides.

In particular, on the surfaces of the locking plates 5 a surface roughness has been introduced, with diagonal pattern, by means of a laser treatment. In this way the friction between locking plates 5 and the specimen 7 increases without affecting the integrity thereof during the test. Thanks to this solution the gripping is increased, improving the way in which the external load is transmitted to the specimen 7 and potential sliding is excluded.

Each of the fixing components 2 and 3 is a single steel block.

The stiffness of the steel guarantees the solidity of the fixing components during the test, while the single block structure guarantees adequate solidity/stiffness of the apparatus, prevents clearance due to the coupling of several components/pieces and, at the same time, ensures the effectiveness of the apparatus 1 also at temperatures different from ambient temperature, since different materials with consequent different thermal expansion coefficient are not present.

In each of the fixing components 2 and 3 a hole 8 is obtained useful for fixing an adapter 9 for a material mechanical test machine. The hole 8 will have an axis X which in use will correspond to the load axis during the test and will coincide with an axis of symmetry of the specimen 7 intersecting two V notches 10 obtained in the specimen 7.

In each of the fixing components 2 and 3 a first guide hole 11 is obtained, adjacent to the groove 4 and designed to slidingly house a guide bar as will be described below, and a second guide hole 12, in which one end of the guide bar will be fixed as will be described below. In particular, in the first guide hole 11 a recirculating ball sleeve 13 is housed within which a respective guide bar will slide.

The apparatus 1 comprises a pair of guide bars 14 with constant diameter, each of which has an end fixed to the first guide hole 11 of one of the fixing components 2 and 3, and in use is slidingly housed in the second guide hole 12 of the other fixing component 2 and 3.

In particular, the end of the guide bar 14 is fixed to the first guide hole 11 by hot-fitting.

The fact that the guide bars 14 are fixed in the respective first guide holes 11 and are slidingly arranged in the respective second guide holes 12 means that in use the same two guide bars 14 are positioned along two respective axes X' and X", which are parallel both to each other and to the load axis X. Furthermore, the three axes X, X' and X" lie on the same plane.

The apparatus 1 comprises a Digital Image Correlation (DIC) system 15 illustrated schematically in figure 1 and arranged to record the deformations of the specimen 7.

Generally, the measurement of the deformations entails the use of strain gauges, the effectiveness of which in terms of response depends on their cohesion capacity with the specimen. As is known to a person skilled in the present shear mechanical test, it is particularly difficult to guarantee this adhesion with composites having a thermoplastic matrix. This problem means that as from a certain deformation value, the cohesion at the strain gauge-material interface may be lacking, with consequent limitation of the measurement field and impossibility of measuring large deformations. Thanks to the use of a DIC system, photographs are taken (or a film sequence is recorded) during the test and it is no longer necessary to glue strain gauges onto the specimen. The photographs or the film sequences are then analysed by means of a software for calculating the deformation.

The guide bar system 14 of the measurement apparatus 1 subject of the present invention guarantees correct alignment of the two fixing components 2 and 3 throughout the test.

This advantage, together with the presence of a DIC system, allows the validity field of the deformation measurement test to be extended.

Furthermore, the apparatus subject of the present invention is lighter than the majority of the instruments currently on the market and, therefore, easier to handle and fit in the machine.

To summarize, the measurement apparatus subject of the present invention:
- eliminates any clearance of the two fixing components 2 and 3 which would negatively affect the test result, thanks to the presence of the two guide bars 14 with constant diameter and hot-fitted on the two fixing components 2 and 3;
- minimizes friction during the test thanks to the presence of the low-friction recirculating ball sleeves 13, for which loads lower than 4 N are guaranteed, self-aligning, with a simplified apparatus system, very high strength and the ability to operate over a wide temperature range;
- guarantees the effectiveness of the measurement also at temperatures other than ambient temperature, since there are no different materials with consequent different thermal expansion coefficient; in this regard tests were conducted in a temperature range from -30°C to +140°C with highly satisfactory result, and it has been estimated that it is possible to operate in an even wider temperature range;
- allows extension of the test field until total breakage or separation of the specimen thanks to the use of a DIC system for measuring the specimen deformation together with the guide bar system;
- guarantees correct application of the load as established by the ASTM D7078 standard thanks to the fact that the specimen is locked only laterally by the two pairs of locking plates.

The apparatus subject of the present invention has a universal character since it can be fitted on any mechanical test machine, and since it can be applied on all fibre-reinforced materials, independently of the type of fibres used (long, short, woven, etc.) and the type of matrix.

Lastly, the measurement apparatus subject of the present invention avoids the use of spacers, as suggested by the ASTM D7078 standard to support the position of the two fixing components when positioning the specimen before conducting the test.

## Claims

1. An apparatus (1) to measure shear properties of composite materials; said apparatus comprising a pair of fixing components (2, 3), on which a specimen (7) of composite material is fixed in a reversible manner, and two pairs of locking plates (5), each of which is housed in a seat (4) obtained in a respective fixing component (2, 3) and is designed to lock a lateral end of said specimen (7), clamping it on two opposite lateral surfaces thereof; said specimen being in contact exclusively with said two pairs of locking plates; each one of said fixing components (2, 3) comprising connection means (8, 9) for the connection to a material mechanical test machine defining a load axis (X);
wherein said apparatus comprises as movement guide only a pair of cylindrical guide bars (14), which are arranged along respective axes (X', X") parallel to the load axis (X) and each have a first end, which is fixed to one of the two fixing components (2, 3) and is housed, in a sliding manner, inside a through cavity (12) obtained in the other one of the two fixing components (3, 2); each of said through cavities (12) housing a bearing (13) within which said guide bar (14) runs; each pair of locking plate (5) being designed to lock only the lateral end of said specimen (7); each one of said fixing components (2, 3) being made in a single block of a material
said apparatus being **characterized in that**
said material has
a stiffness greater than or equal to 150GPa; each guide bars (14) having a first end hot-fitted in a respective seat (11) obtained in said fixing component (2, 3) and said bearings (13) being recirculating ball sleeves.

2. The apparatus according to claim 1, **characterized in that** said axes (X', X"), along which the guide bars (14) are arranged, and the load axis (X) lie on a same plane.

3. The apparatus according to one of the preceding claims, **characterized in that** said fixing components (2, 3) are made of steel.

4. The apparatus according to one of the preceding claims, **characterized in that** it comprises a Digital Imagine Correlation (DIC) system (15), which is designed to record the deformations of the specimen.

5. The apparatus according to one of the preceding claims, **characterized in that** said locking plates (5) have a surface roughness that is such as to increase the friction between the locking plates (5) and the specimen (7).

## Patentansprüche

1. Vorrichtung (1) zum Messen von Schereigenschaften von Verbundwerkstoffen; wobei die Vorrichtung ein Paar Befestigungskomponenten (2, 3), an denen eine Probe (7) aus Verbundmaterial reversibel befestigt ist, und zwei Paare von Verriegelungsplatten (5) aufweist, die jeweils in einem Sitz (4) aufgenommen sind, der in einer jeweiligen Befestigungskomponente (2, 3) erlangt wird und dazu entworfen ist, ein seitliches Ende der Probe (7) zu verriegeln, um sie an zwei ihrer gegenüberliegenden Seitenoberflächen zu klemmen; wobei die Probe exklusiv mit den zwei Paaren von Verriegelungsplatten in Kontakt ist; wobei jede der Befestigungskomponenten (2, 3) Verbindungsmittel (8, 9) zur Verbindung mit einer werkstoffmechanischen Prüfmaschine aufweist, die eine Lastachse (X) definiert;
wobei die Vorrichtung Bewegungsführung nur ein Paar zylindrischer Führungsleisten (14) aufweist, die entlang jeweiliger Achsen (X', X‴) parallel zur Lastachse (X) angeordnet sind und jeweils ein erstes Ende haben, das an einer der beiden Befestigungskomponenten (2, 3) befestigt und gleitend innerhalb eines Durchgangshohlraums (12), der in der anderen der zwei Befestigungskomponenten (3, 2) erlangt wird, aufgenommen ist, wobei jeder der Durchgangshohlräume (12) ein Lager (13) aufnimmt, innerhalb dessen die Führungsleiste (14) läuft; wobei jedes Paar von Verriegelungsplatten (5) entworfen ist, um nur das seitliche Ende der Probe (7) zu verriegeln, wobei jede der Befestigungskomponenten (2, 3) in einem einzigen Block aus einem Material gefertigt ist,
wobei die Vorrichtung **dadurch gekennzeichnet ist, dass**
das Material eine Steifigkeit größer oder gleich 150GPa aufweist, jede Führungsleiste (14) ein erstes Ende hat, das in einem jeweiligen Sitz (11), der in der Befestigungskomponente (2, 3) erlangt wird, heiß eingepasst ist und die Lager (13) Kugelumlaufhülsen sind.

2. Vorrichtung gemäß Anspruch 1, **dadurch gekennzeichnet, dass** die Achsen (X', X"), entlang denen die Führungsleisten (14) angeordnet sind, und die Lastachse (X) in einer Ebene liegen.

3. Vorrichtung gemäß einem der vorhergehenden Ansprüche, **dadurch gekennzeichnet, dass** die Befestigungskomponenten (2, 3) aus Stahl gefertigt sind.

4. Vorrichtung gemäß einem der vorhergehenden Ansprüche, **dadurch gekennzeichnet, dass** sie ein Digital Imagine Correlation (DlC)-System (15) aufweist, das entworfen ist, um die Verformungen der Probe aufzuzeichnen.

5. Vorrichtung gemäß einem der vorhergehenden Ansprüche, **dadurch gekennzeichnet, dass** die Verriegelungsplatten (5) eine Oberflächenrauheit haben, die so ist, dass sie die Reibung zwischen den Verriegelungsplatten (5) und der Probe (7) erhöht.

## Revendications

1. Appareil (1) pour mesurer les propriétés de cisaillement de matériaux composites ; ledit appareil comprenant une paire de composants de fixation (2, 3), sur lesquels un échantillon (7) de matériau composite est fixé de manière réversible, et deux paires de plaques de verrouillage (5), chacune étant logée dans un siège (4) obtenu dans un composant de fixation (2, 3) respectif et étant conçue pour verrouiller une extrémité latérale dudit échantillon (7), en le serrant sur deux surfaces latérales opposées de celui-ci ; ledit échantillon étant en contact exclusivement avec lesdites deux paires de plaques de verrouillage ; chacun desdits composants de fixation (2, 3) comprenant des moyens de connexion (8, 9) pour la connexion à une machine de test mécanique de matériau définissant un axe de charge (X) ;
dans lequel ledit appareil comprend en tant que guide de déplacement uniquement une paire de barres cylindriques de guidage (14), qui sont agencées le long d'axes (X', X") respectifs parallèles à l'axe de charge (X) et chacune présente une première extrémité, qui est fixée à l'un des deux composants de fixation (2, 3) et est logée, de manière coulissante, à l'intérieur d'une cavité traversante (12) obtenue dans l'autre des deux composants de fixation (3, 2) ; chacune desdites cavités traversantes (12) logeant un palier (13) à l'intérieur duquel ladite barre de guidage (14) tourne ; chaque paire de plaques de verrouillage (5) étant conçue pour verrouiller uniquement l'extrémité latérale dudit échantillon (7) ; chacun desdits composants de fixation (2, 3) étant fait d'un seul bloc de matériau, ledit appareil étant **caractérisé en ce que** ledit matériau présente une rigidité supérieure ou égale à 150 GPa ; chaque barre de guidage (14) ayant une première extrémité ajustée à chaud dans un siège (11) respectif obtenu dans ledit composant de fixation (2, 3) et lesdits paliers (13) étant des manchons à recirculation de billes.

2. Appareil selon la revendication 1, **caractérisé en ce que** lesdits axes (X', X"), le long desquels sont agencées les barres de guidage (14), et l'axe de charge (X) se trouvent sur un même plan.

3. Appareil selon l'une des revendications précédentes, **caractérisé en ce que** lesdits éléments de fixation (2, 3) sont en acier.

4. Appareil selon l'une des revendications précédentes, **caractérisé en ce qu'**il comprend un système de corrélation d'images numériques (DIC) (15), qui est conçu pour enregistrer les déformations de l'échantillon.

5. Appareil selon l'une des revendications précédentes, **caractérisé en ce que** lesdites plaques de verrouillage (5) présentent une rugosité de surface telle qu'elle augmente le frottement entre les plaques de verrouillage (5) et l'échantillon (7).
